Europäisches Patentamt

European Patent Office

Office européen des brevets

(11) Publication number: **0 408 246 A2**

# EUROPEAN PATENT APPLICATION

(21) Application number: 90307326.0

(22) Date of filing: 04.07.90

(51) Int. Cl.⁵: **F16C 3/00**

(30) Priority: 10.07.89 US 377714

(43) Date of publication of application:
**16.01.91 Bulletin 91/03**

(84) Designated Contracting States:
**AT BE CH DE DK ES FR GB IT LI LU NL SE**

(71) Applicant: **DEUBLIN COMPANY**
**1919 Stanley Street**
**Northbrook, Illinois 60062(US)**

(72) Inventor: **Boruta, Michael**
**43 Garfield Lane**
**Streamwood, Illinois 60103(US)**
Inventor: **Milovanovic, Lee**
**39525 N. Channelview**
**Antioch, Illinois 60002(US)**
Inventor: **Bez, James R.**
**1806 Longmeadow**
**Lindenhurst, Illinois 60046(US)**

(74) Representative: **Newby, Martin John et al**
**J.Y. & G.W. Johnson Furnival House 14-18**
**High Holbornorn**
**London WC1V 6DE(GB)**

(54) **Expanding shaft assembly.**

(57) An expanding shaft assembly (20) includes a one-piece shaft (21) having a channel (26) therein, a single leaf member (22) assembled together with the shaft and received within the channel for radial movement relative to the shaft between retracted and extended positions, and an expandable bladder (24) located in the channel and expandable to move the leaf member to its extended position defining an extended condition for the expanding shaft assembly.

FIG.4

# EXPANDING SHAFT ASSEMBLY

This invention relates to expanding shaft assemblies, and more particularly to leaf type expanding shafts.

Expanding shafts are used to grip the inner diameters of cores or tubes for transmitting torque for either accelerating, stopping or maintaining tension during rotation of a web, or the like, such as a long length of sheet material of paper or other material being wound on a core. Such wound webs can be as small as a few millimeters in inner and outer diameter and weigh a few grammes, or can have inner and outer diameters measured in metres and weigh thousands of kilograms.

An expanding shaft is designed to provide the torque required to perform in its particular environment. This might include supporting the weight of the web while maintaining the correct position of the web and maintaining the correct tension on the web during winding operations. In some cases, the expanding shaft may serve to centre the web so that the web roll is concentric with the shaft on which it is wound. The expanding shaft can also be used during quick accelerations and emergency stop conditions.

One known expanding shaft assembly includes a hollow generally cylindrical shaft with a plurality of apertures formed therein through which extend a like plurality of gripping lugs. The lugs are spaced apart along the length of the shaft and around the circumference of the shaft assembly. The lugs are operable between a fully retracted position in which the lugs are recessed within the apertures of the shaft to an extended position in which they project outward radially of the shaft through the apertures extending beyond the outer margin of the shaft increasing the effective outer diameter of the shaft assembly and, in use, in gripping engagement with the inner surface of the core carried thereby. Movement of the gripping lugs from their retracted position to their extended position is effected by a mechanical camming system or by an expandable bladder located within the housing.

Expanding shaft assemblies may vary in size, as a function of their application, and the diameter of the shaft assembly may range from 2.5 cm to more than 7.5 cm, for example. The manufacture and assembly of such a known expanding shaft assembly is difficult because of the many parts required, and because of the relatively small side of the shaft assembly which, as mentioned, may have a 2.5 cm diameter.

Manufacture of the expanding shaft assembly of this known type is also complicated by the requirement for machining apertures in the shaft and forming the many lugs to the desired shape.

Assembly of such a unit is difficult because the many gripping lugs must first be positioned within their associated apertures by inserting the lugs into the hollow shaft and aligning them with their associated apertures, and maintaining the lugs aligned in their associated apertures while inserting the operating mechanism, typically in the form of an elongate cylinder, into the hollow housing to engage the inner surfaces of the lugs. It is apparent that this assembly requires considerable manual dexterity to maintain the lugs in their corresponding apertures while the operating core assembly is inserted into the housing from one end.

In the case of expanding shaft assemblies which include air expanded bladders for operating the lugs to their extended position, it is well known that the bladder, which is a thin wall rubber tubing, fatigues rather prematurely because the bladder engages many sharp edges and sharp turns defined by the lugs. This produces high localised stresses due to stretching across very small areas of the bladder. After a number of inflation and deflation cycles for the bladder for actuating the lugs to their extended position, tearing may occur and propagate through the wall of the bladder until an air leak path is created. Although attempts have been made to reduce the number of sharp edges and sharp turns, there is a limit to the amount of changes that can be introduced because of the requirement for driving a plurality of lugs radially outward.

It is therefore an object of the present invention to provide an improved expanding shaft assembly.

Another object of the invention is to provide an expanding shaft assembly which is comprised of fewer parts than required for existing assemblies.

A further object of the invention is to provide an expanding shaft assembly which is simple to manufacture and assemble, thereby reducing the cost of the expanding shaft assembly.

Yet another object of the invention is to provide a shaft assembly which is characterised by an extended useful lifetime.

These and other objects of the invention are provided by an expanding shaft assembly as claimed in claim 1.

The invention consists of certain novel features and structural details hereinafter fully described, illustrated in the accompanying drawings, and particularly claimed in the appended claims, it being understood that various changes in the details may be made without departing from, or sacrificing any of the advantages of, the present invention.

For the purpose of facilitating and understanding the invention, there is illustrated, in the accompanying drawings, a preferred embodiment thereof, from an inspec tion of which, when considered in connection with the following description, the invention, its construction and operation, and many of its advantages will be readily understood and appreciated. In the drawings:

Figure 1, which is labelled PRIOR ART, is a perspective view, partially broken away, of a known expanding shaft assembly;

Figure 2 is a perspective view of an expanding shaft assembly provided by the present invention, shown in the retracted condition;

Figure 3 is a perspective view of the expanding shaft assembly provided by the present invention, shown in the expanded extended condition;

Figure 4 is a sectional view taken along the line 4-4 of Figure 2;

Figure 5 is a sectional view taken along the lines 5-5 of Figure 3;

Figure 6 is a perspective view of an expanding shaft assembly provided by the present invention which includes a multi-section leaf member shown in its retracted condition; and

Figure 7 is a perspective view of the expanding shaft assembly of Figure 6 shown in its extended condition.

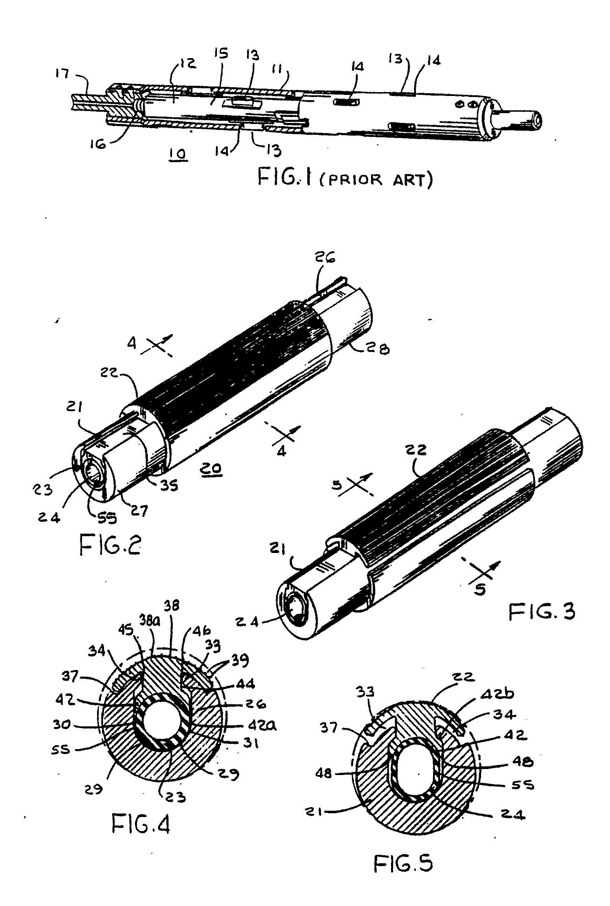

Referring to the drawings, Figure 1 illustrates a known expanding shaft assembly 10. The shaft assembly 10 includes a hollow shaft or housing 11, an operating mechanism 12 contained within the housing, and a plurality of lugs 13 which extend through openings 14 in the wall of the housing 11. The operating mechanism 12 includes a bladder 15 which is expandable in response to introduction of air through an air shaft 16 and air coupling 17 causing the bladder 15 to expand driving the lugs 13 through their associated openings 14.

As has been described above, one disadvantage of prior art expanding shaft assemblies, such as expanding shaft assembly 10 which includes a plurality of gripping lugs 13, is that each of the lugs 13 defines a plurality of sharp edges which tend to fatigue the bladder 15, eventually resulting in leakage air paths. Such air paths compromise the operation of the expanding shaft assembly and require installation of a new bladder operating mechanism 12. Moreover, it is possible that any of the lugs 13 located in the proximity of a fatigued portion of the bladder 15 may fall back into the housing 11 and become disaligned relative to associated openings 14, preventing such lug from being deployed subsequently when the bladder 15 is expanded in use.

Referring now to Figure 2, there is illustrated an expanding shaft assembly 20 provided by the present invention. The shaft assembly 20 includes an elongate one-piece shaft 21, a leaf member 22 and an operating assembly 23 in the form of an expandable bladder 24 having an air valve (not shown) in one end adapted for connection to a source of air under pressure. The other end of the bladder is closed.

Referring to Figures 2 and 4, the shaft 21 is generally cylindrical in shape and has a single generally U-shaped channel 26 formed therethrough from one end 27 to the other end 28 of the shaft 21. The channel 26 has an arcuate base portion 29 and first and second sidewalls 30 and 31 which extend parallel with one another and terminate in inwardly directed portions 33 and 34 which define an opening or mouth 35 for the channel along one side of the shaft 21. The sidewalls of the shaft adjacent to the mouth 35 of the channel define recesses 37 extending the length of the shaft along both sides of the channel. Preferably, the shaft 21 is extruded from an aluminium tube.

The leaf element 22, shown best in Figure 4, has a generally T-shaped cross-section with its outer portion 38 defining a convex gripping surface 38a provided with a plurality of serrations 39 for engaging a work piece (not shown), such as the inner surface of a tube or core. The inner portion 42 of the leaf member 22 defines a concave operating surface 42a, the radius of curvature of which corresponds generally to the radius of curvature of the bottom portion 29 of the channel. The serrated outer surface 38a extends over an arcuate extent of 120°. The convex arcuate portion 38 and the inner arcuate portion 42 are interconnected by a body portion 44 of the leaf member 22.

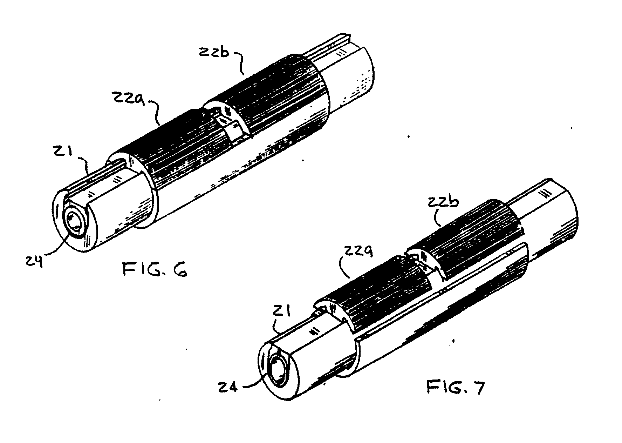

The body portion 44 defines a pair of lateral grooves 45 and 46 which receive the inwardly directed portions 33 and 34 of the shaft and define therewith a travel limit for the leaf member 22. The leaf member 22 is movable between a retracted position as illustrated in Figure 4, whereat it defines a retracted condition for the expanding shaft assembly, and an extended position as illustrated in Figure 5, whereat it defines an extended condition for the expanding shaft assembly. The recesses 37 of the channel receive the outer curved end portions 38 of the leaf member 22 projecting beyond the body portion 44 thereof when the leaf member is in its retracted position.

As illustrated in Figures 6 and 7, the leaf member 22 may comprise two sections 22a and 22b, each identical in shape, for example, and extending coaxially along the shaft.

Referring again to Figures 2 and 4, the bladder 24 is located in a cavity 55 defined by the arcuate bottom portion of the channel of the shaft and the concave arcuate portion of the leaf member. As illustrated in Figure 4, when the leaf member 22 is in its retracted position, the cavity has a generally circular cross-section and the cavity which extends the length of the shaft is generally cylindrical in shape. When the bladder 24 is expanded, as illustrated in Figures 3 and 5, the cavity cross-section becomes generally oval in shape and the bladder 24 expands to this oval configuration. An important advantage of this arrangement is that a minimum expansion of the bladder 24 is required to move the leaf member 22 to its fully extended position. The peripheral ends 48 of the operating surface 42 are rounded, which together with the concave shape of operating surface 42 and of the channel define arcuate engaging surfaces for the bladder eliminating sharp corners which might perforate the bladder.

In one embodiment for an expanding shaft which was made, the shaft 21 had an outer diameter of 24.6 mm (0.97 inch) and a length of 3.66 m (12 feet). The width of the mouth 35 was 3.5 mm (0.138 inch) and the spacing between the sidewalls 30 and 31 was 11.38 mm (0.448 inch).

The radial length or extent of the grooves 45 and 46 was approximately 3 mm (1/8 inch) and the leaf member was 3.66 m (12 feet) in length.

Assembly of the expanding shaft assembly 20 of the present invention is simple. The leaf member 22 is aligned with its operating portion aligned with the channel 26 in the shaft 21 and then the leaf member 22 is slid into place by moving it axially of the shaft 21. When the leaf member 22 is in place on the shaft 21, the operating assembly including bladder 24 is inserted into the cavity 45 defined by the leaf member 22 and the shaft 21.

In use, the expanding shaft assembly 20 is normally in its retracted condition as illustrated in Figures 2 and 4, with the bladder contracted and the ends of the leaf member 22 being located in the recesses 37 formed in the outer peripheral surface of the shaft 21 as illustrated best in Figure 4. In this configuration, the bladder 24 is generally circular as dictated by the shape of the cavity 45.

Upon expanding the bladder 23 to operate the leaf member 22 to its extended position as illustrated in Figures 3 and 5, the bladder 23 fills the cavity 55 as it expands and assumes a generally oval configuration defined by the cavity when the leaf member reaches its extended position. In the extended position, the bladder 23 urges the upper surface 42b of the operating portion 42 of the leaf member 22 into engagement with the inner surfaces of the inwardly directed portions 33 and 34 of the shaft. The arcuate portion 38 is spaced apart from the outer surface of the shaft 21, increasing the effective outer diameter of the expanding shaft assembly 20 when in its extended condition with the leaf member extended.

Thus, it has been shown that the present invention has provided an expanding shaft assembly 20 including a single leaf member 22, or multi-segmented leaf elements 22a, and 22b, which is assembled with a shaft 21 which is formed with a channel 26. The channel is generally U-shaped and cooperates with a generally semi-cylindrical operating surface of the leaf member in such a way as to result in the bladder being extended to a generally oval-shape upon expansion. This concentrates maximum expansion forces to move the leaf member 22 to its fully extended position with a minimal expansion of the bladder because the bladder expansion is substantially only in the direction of movement of the leaf member 22. Also, the inner surface of the leaf member 22 and the U-shaped surface of the channel which are contacted by the bladder are smooth and arcuate, and thus eliminate sharp corners which could otherwise perforate or wear the bladder 24, resulting in eventual failure of the operating mechanism for the expanding shaft assembly 20. Also, the inward edges of the operating surface of the leaf member 20 are rounded to eliminate sharp corners which might otherwise perforate the bladder 24. Moreover, because only a single (or segmented, coaxially extending) leaf member 22 is provided, both manufacture and assembly of the expanding shaft assembly are simplified, resulting in lower cost for the expanding shaft assembly. A plurality of such expanding shaft assemblies can be arranged together for transmitting torque to a common tubular member, providing increased gripping capability while maintaining the simplicity of construction afforded by the expanding shaft assembly provided by the present invention.

**Claims**

1. An expanding shaft assembly (20), comprising generally cylindrical elongate shaft means (21) having first (27) and second (28) ends and provided with opening means between said first and second ends opening to the outer peripheral surface of said shaft, leaf means received in said opening means and movable radially relative to said shaft between retracted and extended positions for changing the effective outer diameter of the shaft assembly, and operating means (24) located within said shaft means for effecting movement of said leaf means at least from the retracted position to the extended position, characterised in that said opening means comprises a channel extending the length of said shaft along only one side thereof and in that travel limit means limit the said relative movement between the shaft and the leaf means.

2. An expanding shaft assembly according to claim 1, characterised in that said leaf means comprises a single leaf member.

3. An expanding shaft assembly according to claim 1, characterised in that said leaf means comprises at least first (22a) and second (22b) leaf members extending coaxially along said one side of said shaft.

4. An expanding shaft assembly according to claim 2 or 3, characterised in that the or each leaf member comprises a radially outer first arcuate portion (38) defining a convex gripping surface, a radially outer second arcuate portion (42) defining a concave operating surface and a body portion (44), integral with said first and second arcuate portions, interconnecting said first and second portions, said second arcuate portion of the or each leaf member being received within said channel and cooperating therewith to define said travel limit means.

5. An expanding shaft assembly according to any of the preceding claims, characterised in that said operating means (24) comprises an expandable bladder located within said channel and expandable to engage said leaf means.

6. An expanding shaft assembly according to claim 4 or claim 5 when dependent on claim 4, characterised in that said gripping surface of said first arcuate portion is serrated.

7. An expanding shaft assembly according to claim 4, claim 5 when dependent on claim 4 or claim 6, characterised in that said first arcuate portion extends approximately 120° in arcuate length.

8. An expanding shaft assembly according to any of the preceding claims, characterised in that the said shaft has an outer diameter of approximately 2.5 cm.

9. An expanding shaft assembly according to claim 8, characterised in that the length of travel of said leaf means is approximately 3 mm and in that the effective diameter of the shaft assembly in the expanded condition with said leaf means extended is approximately 3 mm greater than for the retracted condition.

10. An expanding shaft assembly according to any of the preceding claims, characterised in that said channel (26) has a generally U-shaped configuration with an arcuate base portion (29) and first (30) and second (31) flat parallel extending sidewalls, each terminating in an inwardly directed sidewall portion (33, 34) near the outer peripheral surface of said shaft, and in that said leaf means has first (45) and second (46) axially extending grooves for receiving said inwardly directed sidewall portions, the radial extent of said grooves being greater than the radial extent of said sidewall portions, thereby defining the radial length of travel of said leaf means relative to said shaft.

11. An expanding shaft assembly according to claim 10 when dependent directly or indirectly on claim 5, characterised in that said bladder expands within said channel to a generally oval cross-section in moving said leaf means to the extended position.

12. An expanding shaft assembly according to claim 10, characterised in that the inner surface of said channel (26) is continuous from said arcuate base portion (29) to said inwardly directed sidewall portions (30, 31).

13. An expanding shaft assembly according to any of the preceding claims, characterised in that said leaf means defines a concave operating surface (42) terminating in first and second end portions, each defining a rounded outer edge.

14. Apparatus for transmitting torque to a tubular member comprising a plurality of assembled together expanding shaft assemblies each according to any of the preceding claims.

15. For use with apparatus for transmitting torque to a tubular member, at least one expanding shaft assembly (20), comprising: an elongate one-piece shaft (21) of a given outer diameter, generally cylindrical in shape with first (27) and second (28) ends, said shaft having a channel (26) extending the length thereof between said first and second ends, with said channel opening to the outer peripheral surface of said shaft along only one side thereof; leaf means (22) having a first arcuate portion (38) defining a convex gripping surface, a second arcuate portion (42) defining a concave operating surface and a body portion (44) integral with said first and second arcuate portions, interconnecting said first and second portions, said leaf means being assembled together with said shaft with said second portion of said leaf means received within said channel and cooperating therewith to define travel limit means for said leaf means, said leaf means being movable radially relative to said shaft between a retracted position in which the effective outer diameter of the shaft assembly corresponds to said given outer diameter of said shaft and an extended position in which the outer diameter of the shaft assembly is greater than to said shaft given outer diameter; and operating means (24) located within said channel for engaging said operating surface for moving said leaf means at least from its retracted position to its extended position.

FIG. 1 (PRIOR ART)

FIG. 2

FIG. 3

FIG. 4

FIG. 5

22b

22a

21

24

FIG. 6

22b

22a

21

24

FIG. 7